# EUROPÄISCHE PATENTANMELDUNG

(11) **EP 4 633 033 A1**
(43) Veröffentlichungstag der Anmeldung: **15.10.2025**
(21) Anmeldenummer: 24169675.6
(22) Anmeldetag: 11.04.2024
(51) Int. Cl.: H02P 8/22

(54) **STEUERN EINER SPANNUNGSAUSGABE EINES ZWEIPHASIGEN SCHRITTMOTORS**

(71) Anmelder: Siemens Aktiengesellschaft, 80333 München (DE)
(72) Erfinder: Demuth, Thomas, 09212 Limbach-Oberfrohna (DE)
(74) Vertreter: Siemens Patent Attorneys

(57) **Zusammenfassung**

Die Erfindung betrifft ein Verfahren zum Steuern einer Spannungsausgabe eines zweiphasigen Schrittmotors (1) mit einem Stator, der zwei Statorspulen (Ca, Cb) aufweist, deren Spulenspannungen (Ua, Ub) betragsmäßig jeweils durch eine Maximalspannung (Ud) begrenzt sind. Bei dem Verfahren wird als Sollspannung der Steuerung eine Zielspannung verwendet, die eine Wurzel aus der Summe der Quadrate beider Spulenspannungen (Ua, Ub) ist. In einem statorfesten kartesischen Koordinatensystem mit zwei Koordinatenachsen, die jeweils zu einer der Spulenspannungen (Ua, Ub) korrespondieren, wird ein geforderter Raumzeiger (Z) definiert, dessen Länge die Zielspannung ist und dessen Polarwinkel (φ) modulo eines Maximalwertes des Polarwinkels (φ) zu äquidistanten Zeitpunkten um jeweils einen Schrittwinkel erhöht wird. Wenn die Zielspannung durch den geforderten Raumzeiger (Z) realisierbar ist, werden die Spulenspannungen (Ua, Ub) des geforderten Raumzeigers (Z) realisiert. Andernfalls wird der geforderte Raumzeiger (Z) durch einen Ersatzraumzeiger (Z') ersetzt, der dem geforderten Raumzeiger (Z) unter allen realisierbaren Raumzeigern, deren Länge die Zielspannung ist, am nächsten ist, und es werden die Spulenspannungen (Ua, Ub) des Ersatzraumzeigers (Z') realisiert.

## Beschreibung

Die Erfindung betrifft ein Verfahren zum Steuern einer Spannungsausgabe eines zweiphasigen Schrittmotors. Ferner betrifft die Erfindung einen zweiphasigen Schrittmotor.

Der zweiphasige Schrittmotor weist einen Stator mit zwei Statorspulen auf, deren Spulenspannungen betragsmäßig jeweils durch eine Maximalspannung begrenzt sind.

Ein Parameter für den Betrieb eines Schrittmotors ist der Schrittmodus. In dem so genannten Vollschrittbetrieb wird eine Polteilung in nur vier Winkellagen unterteilt. Daraus ergibt sich ein Betrieb mit einem rechteckförmigen Strom. Dies führt bei niedrigen Drehzahlen zu einem unruhigen Lauf des Schrittmotors.

Zur Verbesserung der Laufruhe und der Positioniergenauigkeit wird die Anzahl der Teilschritte innerhalb einer Polteilung erhöht bis hin zum Erreichen eines sinusförmigen Signals in dem so genannten Mikroschrittbetrieb. Dabei verschlechtert sich jedoch das Verhalten an der Spannungsgrenze des Schrittmotors.

Die effektive Ausgangsspannung im Vollschrittmodus ist um etwa 80% größer gegenüber einer Ansteuerung mit sinusförmigen Spannungen. Das liegt zum einen an der geometrischen Addition der Komponentenspannungen der von den Statorspulen gebildeten Teilsysteme und zum anderen an der Überhöhung der fundamentalen Schwingung im Amplitudenspektrum eines Rechtecksignals gegenüber dessen Amplitude. Schrittmotoren haben in der Regle eine sehr große Induktivität, so dass mit dieser Vollschrittansteuerung keine unzulässig großen Stromspitzen entstehen. Daher lassen sich mit einer Vollschrittansteuerung höhere Drehzahlen des Schrittmotors als mit einer Mikroschrittansteuerung erreichen.

Der Erfindung liegt die Aufgabe zugrunde, eine verbesserte Steuerung einer Spannungsausgabe eines Schrittmotors anzugeben, die Vorteile eines Mikroschrittbetriebs und eines Vollschrittbetriebs des Schrittmotors kombiniert.

Die Aufgabe wird erfindungsgemäß durch ein Verfahren mit den Merkmalen des Anspruchs 1 und einen Schrittmotor mit den Merkmalen des Anspruchs 6 gelöst.

Vorteilhafte Ausgestaltungen der Erfindung sind Gegenstand der Unteransprüche.

Bei dem erfindungsgemäßen Verfahren wird eine Spannungsausgabe eines zweiphasigen Schrittmotors mit einem Stator, der zwei Statorspulen aufweist, deren Spulenspannungen betragsmäßig jeweils durch eine Maximalspannung begrenzt sind, gesteuert, wobei
- als Sollspannung der Steuerung eine Zielspannung verwendet wird, die eine Wurzel aus der Summe der Quadrate beider Spulenspannungen ist,
- in einem statorfesten kartesischen Koordinatensystem mit zwei Koordinatenachsen, die jeweils zu einer der Spulenspannungen korrespondieren, ein geforderter Raumzeiger definiert wird, dessen Länge die Zielspannung ist und dessen Polarwinkel modulo eines Maximalwertes des Polarwinkels zu äquidistanten Zeitpunkten um jeweils einen Schrittwinkel erhöht wird, und,
- wenn die Zielspannung durch den geforderten Raumzeiger realisierbar ist, die Spulenspannungen des geforderten Raumzeigers realisiert werden und
- andernfalls der geforderte Raumzeiger durch einen Ersatzraumzeiger ersetzt wird, der dem geforderten Raumzeiger unter allen realisierbaren Raumzeigern, deren Länge die Zielspannung ist, am nächsten ist, und die Spulenspannungen des Ersatzraumzeigers realisiert werden.

Bei dem erfindungsgemäßen Verfahren werden also Spulenspannungen der Statorspulen eines Schrittmotors in Abhängigkeit von einer Zielspannung realisiert, die eine Wurzel aus der Summe der Quadrate beider Spulenspannungen ist. Da die Beträge beider Spulenspannungen durch eine Maximalspannung begrenzt sind, ist die Zielspannung durch einen Zielspannungsmaximalwert begrenzt, der die Maximalspannung der Spulenspannungen multipliziert mit √2 ist. Um Spulenspannungen zu definieren, durch die eine Zielspannung realisiert wird, wird ein statorfestes kartesisches Koordinatensystem mit zwei Koordinatenachsen, die jeweils zu einer der Spulenspannungen korrespondieren, verwendet. In diesem Koordinatensystem wird für eine Zielspannung ein "geforderter Raumzeiger" definiert, dessen Länge die Zielspannung ist und dessen Polarwinkel zeitabhängig ist, wobei der Polarwinkel zu äquidistanten Zeitpunkten um jeweils einen Schrittwinkel erhöht wird.

Die Erfindung berücksichtigt, dass nicht jeder derart definierte geforderte Raumzeiger tatsächlich realisierbar ist, denn es kann der Fall eintreten, dass der Betrag einer Komponente des geforderten Raumzeigers die Maximalspannung der Spulenspannungen überschreitet. Dieser Fall kann allerdings nur eintreten, wenn die Zielspannung größer als die Maximalspannung der Spulenspannungen ist. Solange die Zielspannung die Maximalspannung der Spulenspannungen nicht überschreitet, kann dagegen jeder geforderte Raumzeiger realisiert werden und erfindungsgemäß wird der geforderte Raumzeiger dann auch realisiert. Da der Polarwinkel zeitabhängig ansteigt, dreht sich der geforderte Raumzeiger mit fortschreitender Zeit in dem statorfesten Koordinatensystem und seine Komponenten ändern sich sinusförmig in Abhängigkeit von der Zeit, solange sich die Zielspannung nicht ändert, beziehungsweise quasi-sinusförmig bei sich ändernder Zielspannung. Solange die Zielspannung die Maximalspannung der Spulenspannungen nicht überschreitet, wird der Schrittmotor daher in einem Mikroschrittbetrieb betrieben.

Wenn die Zielspannung größer als die Maximalspannung der Spulenspannungen ist, können nur noch bestimmte geforderte Raumzeiger realisiert werden. Ein nicht realisierbarer geforderter Raumzeiger wird dann durch einen Ersatzraumzeiger ersetzt, der dem geforderten Raumzeiger unter allen realisierbaren Raumzeigern, deren Länge die Zielspannung ist, am nächsten ist. Als Spulenspannungen werden dann die Komponenten des Ersatzraumzeigers realisiert. Dies führt dazu, dass die realisierten Spulenspannungen in Abhängigkeit von der Zeit nur noch in einzelnen Zeitintervallen sinusförmig oder quasi-sinusförmig verlaufen, während ihre Beträge zwischen diesen Zeitintervallen konstant oder quasi-konstant sind. Dabei werden die Zeitintervalle mit sinusförmigen oder quasi-sinusförmigen Verläufen der Spulenspannungen mit steigender Zielspannung immer kürzer, so dass sich die zeitlichen Verläufe der Spulenspannungen mit steigender Zielspannung immer mehr Rechteckspannungen annähern.

Wenn die Zielspannung ihren Zielspannungsmaximalwert annimmt, kann die Zielspannung nur noch durch vier Raumzeiger realisiert werden und die zeitlichen Verläufe der Spulenspannungen sind Rechteckspannungen. Der Schrittmotor wird dann im Vollschrittbetrieb betrieben.

Das erfindungsgemäße Verfahren ermöglicht somit einen kontinuierlichen Übergang von dem Mikroschrittbetrieb zu dem Vollschrittbetrieb und umgekehrt.

Bei einer Ausgestaltung des erfindungsgemäßen Verfahrens ist die Maximalspannung der Spulenspannungen eine konstante Zwischenkreisgleichspannung eines Zwischenkreises, in dem die Statorspulen angeordnet sind. Die Zwischenkreisgleichspannung kann dabei beispielsweise durch Öffnen und Schließen von Schaltern an die Statorspulen gelegt werden.

Bei einer weiteren Ausgestaltung des erfindungsgemäßen Verfahrens werden die Spulenspannungen jeweils durch eine Pulsweitenmodulation aus der Maximalspannung erzeugt. Die Spulenspannungen werden dabei also durch eine zeitliche Mittelung beziehungsweise Glättung von an die Statorspulen gelegten Spannungspulsen variabler Dauer erzeugt.

Bei einer weiteren Ausgestaltung des erfindungsgemäßen Verfahrens wird die Ausgabespannung des Schrittmotors als Stellgröße für eine Regelung eines Ausgangsstroms des Schrittmotors verwendet. Der Ausgangsstrom des Schrittmotors korrespondiert zu einer Drehzahl des Schrittmotors, so dass durch die Regelung des Ausgangsstroms auch die Drehzahl des Schrittmotors geregelt wird.

Ein erfindungsgemäßer zweiphasiger Schrittmotor umfasst
- einen Stator, der zwei Statorspulen aufweist, deren Spulenspannungen betragsmäßig jeweils durch eine Maximalspannung begrenzt sind, und
- eine Steuereinheit, die eingerichtet ist, eine Spannungsausgabe des Schrittmotors zu steuern, wobei
- als Sollspannung der Steuerung eine Zielspannung verwendet wird, die eine Wurzel aus der Summe der Quadrate beider Spulenspannungen ist,
- in einem statorfesten kartesischen Koordinatensystem mit zwei Koordinatenachsen, die jeweils zu einer der Spulenspannungen korrespondieren, ein geforderter Raumzeiger definiert wird, dessen Länge die Zielspannung ist und dessen Polarwinkel modulo eines Maximalwertes des Polarwinkels zu äquidistanten Zeitpunkten um jeweils einen Schrittwinkel erhöht wird, und,
- wenn die Zielspannung durch den geforderten Raumzeiger realisierbar ist, die Spulenspannungen des geforderten Raumzeigers realisiert werden und
- andernfalls der geforderte Raumzeiger durch einen Ersatzraumzeiger ersetzt wird, der dem geforderten Raumzeiger unter allen realisierbaren Raumzeigern, deren Länge die Zielspannung ist, am nächsten ist, und die Spulenspannungen des Ersatzraumzeigers realisiert werden.

Bei einer Ausgestaltung des erfindungsgemäßen Schrittmotors ist die Maximalspannung der Spulenspannungen eine konstante Zwischenkreisgleichspannung eines Zwischenkreises, in dem die Statorspulen angeordnet sind.

Bei einer weiteren Ausgestaltung des erfindungsgemäßen Schrittmotors ist die Steuereinheit eingerichtet, die Spulenspannungen jeweils durch eine Pulsweitenmodulation aus der Maximalspannung zu erzeugen.

Bei einer weiteren Ausgestaltung des erfindungsgemäßen Schrittmotors ist die Steuereinheit eingerichtet, als die Ausgabespannung des Schrittmotors als Stellgröße für eine Regelung eines Ausgangsstroms des Schrittmotors zu verwenden.

Der Maximalwert des Polarwinkels eines geforderten Raumzeigers beträgt beispielsweise 360 Grad.

Die Merkmale eines erfindungsgemäßen Schrittmotors korrespondieren zu den Merkmalen des erfindungsgemäßen Verfahrens. Daher korrespondieren auch die Vorteile eines erfindungsgemäßen Schrittmotors zu den oben genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: einen Schaltplan eines Ausführungsbeispiels eines zweiphasigen Schrittmotors,
- FIG 2: realisierte Spulenspannungen eines Schrittmotors für eine erste Zielspannung,
- FIG 3: realisierte Spulenspannungen eines Schrittmotors für eine zweite Zielspannung,
- FIG 4: realisierte Spulenspannungen eines Schrittmotors für eine dritte Zielspannung,
- FIG 5: zeitliche Verläufe von Spulenspannungen eines Schrittmotors bei steigender Zielspannung.

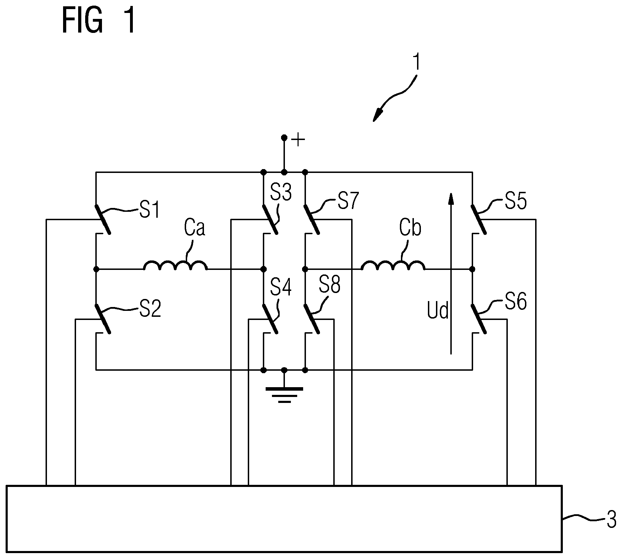

Figur 1 (FIG 1) zeigt einen Schaltplan eines Ausführungsbeispiels eines zweiphasigen Schrittmotors 1. Der Schrittmotor 1 dieses Ausführungsbeispiels weist einen Stator mit einer ersten Statorspule Ca und einer zweiten Statorspule Cb auf, die bipolar geschaltet sind. Jedes Spulenende jeder Statorspule Ca, Cb ist durch einen der Schalter S1 bis S8 mit einem Erdpotential oder einem gegenüber dem Erdpotential positiven Zwischenkreispotential verbindbar. Dadurch sind zwischen einem ersten und dem zweiten Spulenende jeder Statorspule Ca, Cb die Spannungen Ud, 0 und -Ud realisierbar, wobei Ud die (positive) Zwischenkreisgleichspannung des Zwischenkreises bezeichnet, in dem die Statorspulen Ca, Cb angeordnet sind. Die Schalter S1 bis S8 sind beispielsweise jeweils ein Halbleiterschalter wie ein Bipolartransistor mit isolierter Gate-Elektrode (englisch Insulated-Gate Bipolar Transistor, abgekürzt: IGBT) oder ein MetallOxid-Halbleiter-Feldeffekttransistor (englisch Metal-Oxide-Semiconductor Field-Effect Transistor, abgekürzt: MOSFET), beispielsweise auf der Basis von Silizium oder Galliumnitrid.

Der Schrittmotor 1 weist ferner eine Steuereinheit 3 auf, durch die die Schalter S1 bis S8 unabhängig voneinander ansteuerbar sind, so dass sie jeweils geöffnet oder geschlossen sind. Dabei ist die Steuereinheit 3 eingerichtet, die zwischen den Spulenenden jeder Statorspule Ca, Cb anliegenden Spannungen durch eine Pulsweitenmodulation zu modulieren und dadurch zwischen den Spulenenden der ersten Statorspule Ca eine zeitlich gemittelte beziehungsweise geglättete erste Spulenspannung Ua und zwischen den Spulenenden der zweiten Statorspule Cb eine zeitlich gemittelte beziehungsweise geglättete zweite Spulenspannung Ub zu erzeugen. Die Spulenspannungen Ua, Ub können daher Werte zwischen -Ud und +Ud annehmen und sind betragsmäßig durch die Zwischenkreisgleichspannung Ud als Maximalspannung begrenzt. Die Steuereinheit 3 ist eingerichtet, eine Spannungsausgabe des Schrittmotors 1 durch die Spulenspannungen Ua, Ub gemäß dem im Folgenden beschriebenen Verfahren zu steuern.

Die Steuerung lässt sich anschaulich mittels eines statorfesten kartesischen Koordinatensystems beschreiben, das zwei Koordinatenachsen aufweist. Auf der Abszissenachse (Rechtsachse) des Koordinatensystems sind die Werte der ersten Spulenspannung Ua aufgetragen, auf der Ordinatenachse (Hochachse) des Koordinatensystems sind die Werte der zweiten Spulenspannung Ub aufgetragen. Jedes Paar von Spulenspannungen Ua, Ub korrespondiert somit in diesem Koordinatensystem eineindeutig zu einem Raumzeiger, der von dem Koordinatenursprung des Koordinatensystems auf einen Punkt des Koordinatensystems zeigt, der die Koordinaten (Ua, Ub) hat und als Endpunkt des Raumzeigers bezeichnet wird. Statt durch die Koordinaten (Ua, Ub) seines Endpunktes kann ein Raumzeiger auch durch Polarkoordinaten beschrieben werden, das heißt durch seine Länge und seinen Polarwinkel. Jeder Raumzeiger definiert somit eindeutig ein Paar von Spulenspannungen Ua, Ub, die als Spulenspannungen Ua, Ub des Raumzeigers bezeichnet werden.

Die Sollspannung der Steuerung der Spannungsausgabe des Schrittmotors 1 ist eine Zielspannung, die eine Wurzel aus der Summe der Quadrate beider Spulenspannungen Ua, Ub ist und somit die Länge eines Raumzeigers in dem statorfesten Koordinatensystem definiert. Der Zielspannung wird in dem statorfesten Koordinatensystem ein geforderter Raumzeiger Z zugeordnet, dessen Länge die Zielspannung ist und dessen Polarwinkel φ modulo 360° zu äquidistanten Zeitpunkten um jeweils einen Schrittwinkel erhöht wird. Wenn die Zielspannung durch den geforderten Raumzeiger Z realisierbar ist, werden die Spulenspannungen Ua, Ub des geforderten Raumzeigers Z realisiert. Andernfalls wird der geforderte Raumzeiger Z durch einen Ersatzraumzeiger Z' ersetzt, der dem geforderten Raumzeiger Z unter allen realisierbaren Raumzeigern, deren Länge die Zielspannung ist, am nächsten ist, und es werden die Spulenspannungen Ua, Ub des Ersatzraumzeigers Z' realisiert. Als Abstand zweier Raumzeiger gleicher Länge ist dabei der Betrag der Differenz der Polarwinkel der beiden Raumzeiger definiert. Polarwinkeln, für die es für den Ersatzraumzeiger zwei Kandidaten gibt, die gemäß dieser Abstandsdefinition denselben Abstand von dem geforderte Raumzeiger Z haben, wird durch eine geeignete Auswahlvorschrift einer dieser beiden Kandidaten als Ersatzraumzeiger Z' zugeordnet.

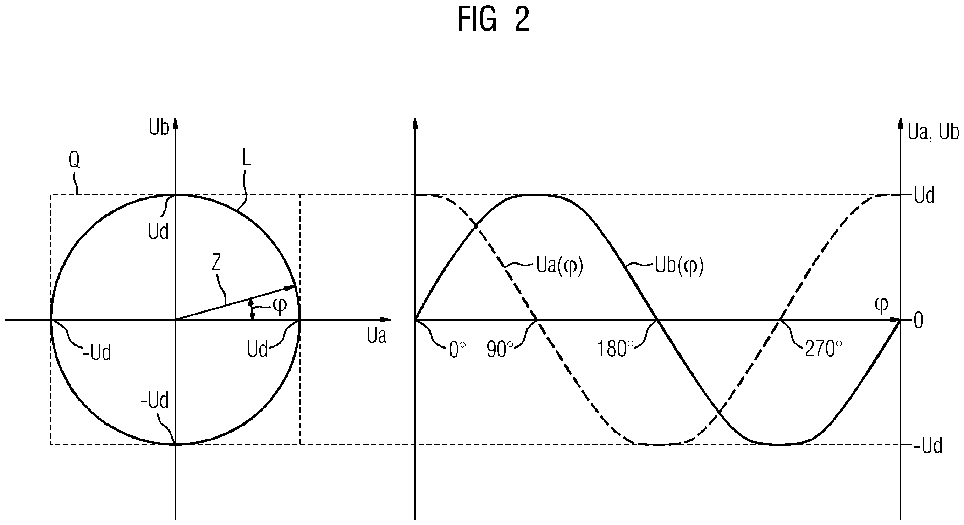

Wenn die Zielspannung die Zwischenkreisgleichspannung Ud nicht überschreitet, kann der geforderte Raumzeiger Z für jeden Wert des Polarwinkels φ realisiert werden. Andernfalls kann der geforderte Raumzeiger Z nur für bestimmte Werte des Polarwinkels φ realisiert werden. Die Figuren 2 bis 4 veranschaulichen dies. In den Figuren 2 bis 4 ist jeweils links das statorfeste Koordinatensystem dargestellt. Ein Quadrat Q, dessen Eckpunkte P1, P2, P3, P4 die Koordinaten (Ud,Ud), (-Ud,Ud), (-Ud,-Ud), (Ud,-Ud) haben, zeigt den Bereich der realisierbaren Raumzeiger Z: jeder Raumzeiger, dessen Endpunkt in dem Quadrat Q liegt, ist realisierbar und jeder andere Raumzeiger ist nicht realisierbar, weil der Betrag wenigstens einer Spulenspannung Ua, Ub eines Raumzeigers, dessen Endpunkt außerhalb des Quadrats Q liegt, größer als die Zwischenkreisgleichspannung Ud ist. Eine Kreislinie L ist der Rand eines Kreises, dessen Mittelpunkt der Koordinatenursprung ist und dessen Radius die Zielspannung ist. Der Endpunkt eines geforderten Raumzeigers Z und der Endpunkt eines Ersatzraumzeigers Z' liegen daher auf der Kreislinie L. Ferner ist in den Figuren 2 bis 4 jeweils rechts ein Diagramm dargestellt, das die Spulenspannungen Ua(φ), Ub(cp) des realisierten Raumzeigers in Abhängigkeit von dem Polarwinkel φ des geforderten Raumzeigers Z zeigt.

Figur 2 (FIG 2) zeigt den Fall, dass die Zielspannung mit der Zwischenkreisgleichspannung Ud übereinstimmt. In diesem Fall berührt die Kreislinie L auf den Koordinatenachsen jeweils eine Seite des Quadrats Q. Der Endpunkt jedes geforderten Raumzeigers Z liegt für jeden Polarwinkel φ in dem Quadrat Q und daher ist jeder geforderte Raumzeiger Z realisierbar. Die erste Spulenspannung Ua(φ) als Funktion des Polarwinkels φ ist Ud·cos(φ), die zweite Spulenspannung Ub(cp) als Funktion des Polarwinkels φ ist Ud·sin(φ).

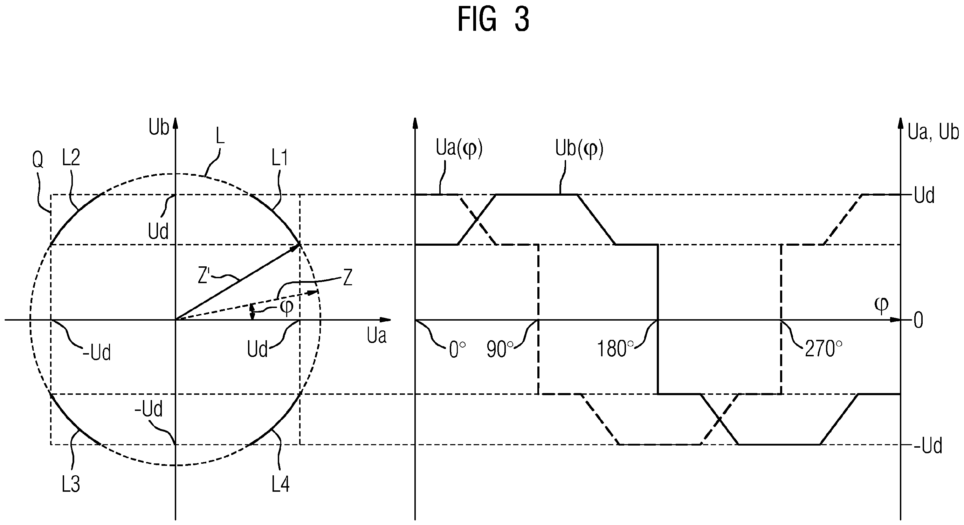

Figur 3 (FIG 3) zeigt einen Fall, in dem die Zielspannung zwischen den Werten Ud und ^2Ud liegt. In diesem Fall verläuft ein Teil der Kreislinie L außerhalb des Quadrats Q und es sind nur Raumzeiger mit der Länge der Zielspannung realisierbar, deren Endpunkt auf einem der Kreisbögen L1, L2, L3, L4 liegt, die in dem Quadrat Q verlaufen. Beispielhaft ist ein geforderter

Raumzeiger Z dargestellt, der nicht realisierbar ist, da die erste Spulenspannung Ua dieses geforderten Raumzeigers Z größer als die Zwischenkreisgleichspannung Ud ist. Dieser geforderte Raumzeiger Z wird durch einen Ersatzraumzeigers Z' ersetzt, dessen Endpunkt auf dem Kreisbogen L1 liegt und der dem geforderten Raumzeiger Z am nächsten ist. Entsprechendes gilt für andere nicht realisierbare Raumzeiger. Jede Spulenspannung Ua(φ), Ub(φ) als Funktion des Polarwinkels φ weist Plateaus und Sprünge auf. Jedes Plateau korrespondiert entweder zu einem Bereich von Polarwinkeln φ, denen derselbe Ersatzraumzeiger Z' zugeordnet ist, oder zu zwei aneinandergrenzenden Bereichen von Polarwinkeln φ, denen zwei verschiedene Ersatzraumzeiger Z' mit derselben Komponente Ua beziehungsweise Ub zugeordnet sind. Ein Sprung einer Spulenspannung Ua(φ), Ub(φ) tritt zwischen zwei Plateaus auf, die zu zwei Ersatzraumzeigern Z' korrespondieren, die sich voneinander durch das Vorzeichen ihrer jeweiligen Komponente Ua beziehungsweise Ub unterscheiden. Die erste Spulenspannung Ua(φ) weist Sprünge bei φ=90° und (p=270° auf, die zweite Spulenspannung Ub(φ) weist Sprünge bei φ=0° und φ=180° auf. Mit wachsender Zielspannung verbreitern sich die Plateaus und die Spulenspannungen Ua, Ub der Plateaus nähern sich den Werten ±Ud.

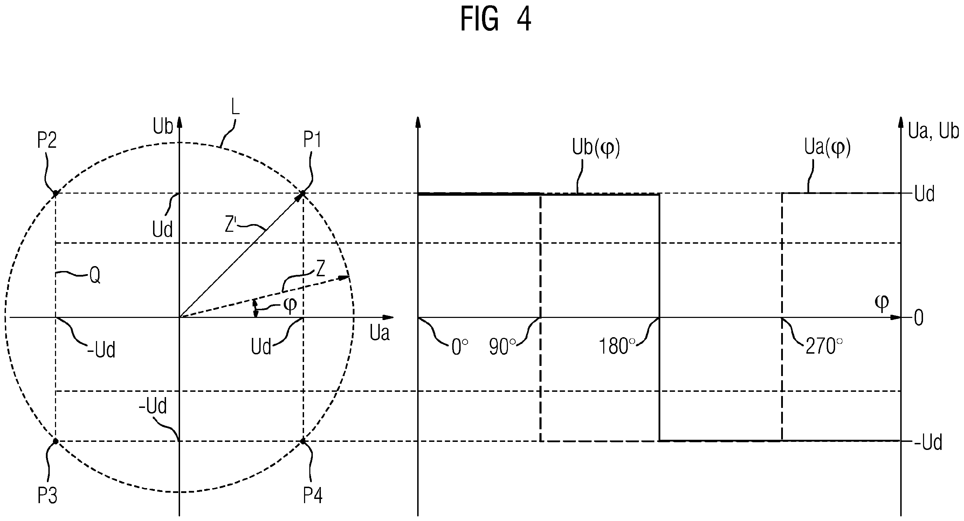

Figur 4 (FIG 4) zeigt den Fall, dass die Zielspannung ihren Maximalwert √2. Ud annimmt. In diesem Fall berührt die Kreislinie L das Quadrat Q nur in dessen Eckpunkten P1, P2, P3, P4 und verläuft sonst außerhalb des Quadrats Q. Somit sind nur geforderte Raumzeiger mit der Länge der Zielspannung realisierbar, deren Endpunkt mit einem der Eckpunkte P1, P2, P3, P4 des Quadrats Q übereinstimmt. Analog zu Figur 3 ist beispielhaft ist ein geforderter Raumzeiger Z dargestellt, der nicht realisierbar ist, da die erste Spulenspannung Ua dieses geforderten Raumzeigers Z größer als die Zwischenkreisgleichspannung Ud ist. Dieser geforderte Raumzeiger Z wird durch einen Ersatzraumzeigers Z' ersetzt, dessen Endpunkt der Eckpunkt P1 des Quadrats Q ist. Jede Spulenspannung Ua(φ), Ub(φ) als Funktion des Polarwinkels φ weist nur noch Plateaus mit den Werten -Ud und +Ud auf.

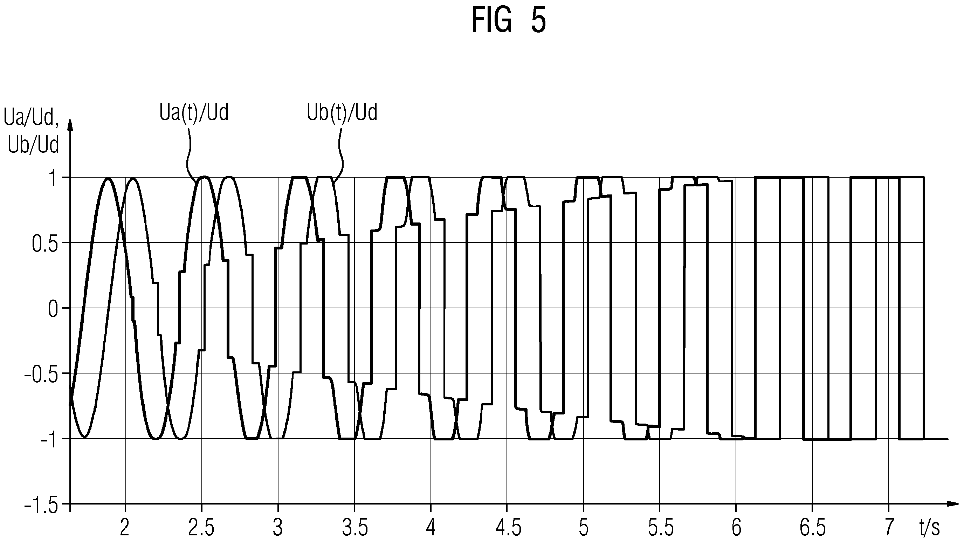

Figur 5 (FIG 5) zeigt Verläufe Ua(t), Ub(t) der Spulenspannungen Ua, Ub in Abhängigkeit von einer Zeit t, wenn die Zielspannung mit zunehmender Zeit t bis zu ihrem Maximalwert √2·Ud kontinuierlich erhöht wird. Auf der Abszissenachse ist die Zeit t in Sekunden aufgetragen, auf der Ordinatenachse sind die Verhältnisse Ua/Ud und Ub/Ud der Spulenspannungen Ua, Ub zu der Zwischenkreisgleichspannung Ud aufgetragen.

Anfänglich bis etwa t=2s ist die Zielspannung kleiner als oder gleich Ud, so dass Ua(t) und Ub(t) sinusförmig verlaufen. Diese Verläufe Ua(t) und Ub(t) entsprechen etwa den Verläufen Ua(φ), Ub(φ) in Figur 2, da der Polarwinkel φ des geforderten Raumzeigers (modulo 360°) linear mit der Zeit t wächst. Bis etwa t=2s wird der Schrittmotor 1 daher im Mikroschrittbetrieb betrieben.

Danach, zwischen etwa t=2s und t=6s, nimmt die Zielspannung Werte zwischen Ud und ^2Ud an. Ua(t) und Ub(t) verhalten sich ähnlich wie Ua(φ), Ub(φ) in Figur 3, wobei die "Plateaus" von Ua(t) und Ub(t) jedoch nicht flach wie die Plateaus von Ua(φ) und Ub(φ) in Figur 3 verlaufen, sondern etwas schräg, da die Zielspannung mit der Zeit t zunimmt. Wegen der zunehmenden Zielspannung verbreitern sich auch die Plateaus von Ua(t) und Ub(t) mit zunehmender Zeit t und die Spulenspannungen Ua, Ub der Plateaus nähern sich den Werten ±Ud. Mit zunehmender Zeit t nähern sich Ua(t) und Ub(t) daher immer mehr Rechteckspannungen an.

Bei etwa t=6s erreicht die Zielspannung ihren Maximalwert √2·Ud und behält danach diesen Wert bei. Ua(t) und Ub(t) entsprechen nun Ua(φ), Ub(cp) in Figur 4 und sind Rechteckspannungen. Ab etwa t=6s wird der Schrittmotor 1 daher im Vollschrittbetrieb betrieben.

Die Ansteuerung des Schrittmotors 1 gemäß dem erfindungsgemäßen Verfahren ermöglicht somit einen kontinuierlichen Übergang von dem Mikroschrittbetrieb zu dem Vollschrittbetrieb.

Ein unipolarer Schrittmotor wird erfindungsgemäß entsprechend gesteuert, wobei das Quadrat Q der Figuren 2 bis 4 durch ein Quadrat ersetzt wird, dessen Eckpunkte die Koordinaten (0,0), (Ud,0), (Ud,Ud), (0,Ud) sind, und die Polarwinkel φ der geforderten Raumzeiger sich auf ein Koordinatensystem beziehen, dessen Koordinatenursprung der Mittelpunkt dieses Quadrats ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

## Patentansprüche

1. Verfahren zum Steuern einer Spannungsausgabe eines zweiphasigen Schrittmotors (1) mit einem Stator, der zwei Statorspulen (Ca, Cb) aufweist, deren Spulenspannungen (Ua, Ub) betragsmäßig jeweils durch eine Maximalspannung (Ud) begrenzt sind, wobei
- als Sollspannung der Steuerung eine Zielspannung verwendet wird, die eine Wurzel aus der Summe der Quadrate beider Spulenspannungen (Ua, Ub) ist,
- in einem statorfesten kartesischen Koordinatensystem mit zwei Koordinatenachsen, die jeweils zu einer der Spulenspannungen (Ua, Ub) korrespondieren, ein geforderter Raumzeiger (Z) definiert wird, dessen Länge die Zielspannung ist und dessen Polarwinkel (φ) modulo eines Maximalwertes des Polarwinkels (φ) zu äquidistanten Zeitpunkten um jeweils einen Schrittwinkel erhöht wird, und,
- wenn die Zielspannung durch den geforderten Raumzeiger (Z) realisierbar ist, die Spulenspannungen (Ua, Ub) des geforderten Raumzeigers (Z) realisiert werden und
- andernfalls der geforderte Raumzeiger (Z) durch einen Ersatzraumzeiger (Z') ersetzt wird, der dem geforderten Raumzeiger (Z) unter allen realisierbaren Raumzeigern, deren Länge die Zielspannung ist, am nächsten ist, und die Spulenspannungen (Ua, Ub) des Ersatzraumzeigers (Z') realisiert werden.

2. Verfahren nach Anspruch 1, wobei die Maximalspannung (Ud) eine konstante Zwischenkreisgleichspannung eines Zwischenkreises ist, in dem die Statorspulen (Ca, Cb) angeordnet sind.

3. Verfahren nach Anspruch 1 oder 2, wobei die Spulenspannungen (Ua, Ub) jeweils durch eine Pulsweitenmodulation aus der Maximalspannung (Ud) erzeugt werden.

4. Verfahren nach einem der vorhergehenden Ansprüche, wobei die Ausgabespannung des Schrittmotors (1) als Stellgröße für eine Regelung eines Ausgangsstroms des Schrittmotors (1) verwendet wird.

5. Verfahren nach einem der vorhergehenden Ansprüche, wobei der Maximalwert des Polarwinkels (φ) 360 Grad beträgt.

6. Zweiphasiger Schrittmotor (1), umfassend
- einen Stator, der zwei Statorspulen (Ca, Cb) aufweist, deren Spulenspannungen (Ua, Ub) betragsmäßig jeweils durch eine Maximalspannung (Ud) begrenzt sind, und
- eine Steuereinheit (3), die eingerichtet ist, eine Spannungsausgabe des Schrittmotors (1) zu steuern, wobei
- als Sollspannung der Steuerung eine Zielspannung verwendet wird, die eine Wurzel aus der Summe der Quadrate beider Spulenspannungen (Ua, Ub) ist,
- in einem statorfesten kartesischen Koordinatensystem mit zwei Koordinatenachsen, die jeweils zu einer der Spulenspannungen (Ua, Ub) korrespondieren, ein geforderter Raumzeiger (Z) definiert wird, dessen Länge die Zielspannung ist und dessen Polarwinkel (φ) modulo eines Maximalwertes des Polarwinkels (φ) zu äquidistanten Zeitpunkten um jeweils einen Schrittwinkel erhöht wird, und,
- wenn die Zielspannung durch den geforderten Raumzeiger (Z) realisierbar ist, die Spulenspannungen (Ua, Ub) des geforderten Raumzeigers (Z) realisiert werden und
- andernfalls der geforderte Raumzeiger (Z) durch einen Ersatzraumzeiger (Z') ersetzt wird, der dem geforderten Raumzeiger (Z) unter allen realisierbaren Raumzeigern, deren Länge die Zielspannung ist, am nächsten ist, und die Spulenspannungen (Ua, Ub) des Ersatzraumzeigers (Z') realisiert werden.

7. Schrittmotor (1) nach Anspruch 6, wobei die Maximalspannung (Ud) eine konstante Zwischenkreisgleichspannung eines Zwischenkreises ist, in dem die Statorspulen (Ca, Cb) angeordnet sind.

8. Schrittmotor (1) nach Anspruch 6 oder 7, wobei die Steuereinheit (3) eingerichtet ist, die Spulenspannungen (Ua, Ub) jeweils durch eine Pulsweitenmodulation aus der Maximalspannung (Ud) zu erzeugen.

9. Schrittmotor (1) nach einem der Ansprüche 6 bis 8, wobei die Steuereinheit (3) eingerichtet ist, die Ausgabespannung des Schrittmotors (1) als Stellgröße für eine Regelung eines Ausgangsstroms des Schrittmotors (1) zu verwenden.

10. Schrittmotor (1) nach einem der Ansprüche 6 bis 9, wobei der Maximalwert des Polarwinkels (φ) 360 Grad beträgt.
